# EUROPÄISCHE PATENTSCHRIFT

(11) **EP 2 744 990 B1**
(45) Veröffentlichungstag und Bekanntmachung des Hinweises auf die Patenterteilung: **19.09.2018**
(21) Anmeldenummer: 12737571.5
(22) Anmeldetag: 20.07.2012
(51) Int. Cl.: F01N 3/20, F01N 3/28, F01N 13/00

(54) **VORRICHTUNG ZUR BEHANDLUNG VON ABGASEN**
EXHAUST TREATMENT APPARATUS
DISPOSITIF DE TRAITEMENT DE GAZ D'ÉCHAPPEMENT

(30) Priorität: 19.08.2011 DE 102011110664
(43) Veröffentlichungstag der Anmeldung: 25.06.2014
(73) Patentinhaber: Continental Automotive GmbH, 30165 Hannover (DE)
(72) Erfinder: NAGEL, Thomas, 51766 Engelskirchen (DE); KURTH, Ferdi, 53894 Mechernich (DE)
(86) Internationale Anmeldenummer: PCT/EP2012/064294
(87) Internationale Veröffentlichungsnummer: WO 2013/026640

(56) Entgegenhaltungen:
- WO-A1-92/13636
- WO-A1-96/10127
- DE-A1- 4 017 360
- DE-A1- 19 602 266
- DE-A1-102009 018 182
- US-A1- 2007 056 263

## Beschreibung

Die vorliegende Erfindung betrifft eine Vorrichtung zur Behandlung von Abgasen mit wenigstens einem ersten Wabenkörper und einem zweiten Wabenkörper, die für ein Abgas durchströmbar und hintereinander in einer Abgasleitung angeordnet sind. Die vorliegende Erfindung betrifft insbesondere solche Vorrichtungen, bei denen der erste Wabenkörper elektrisch beheizbar ist.

Um die Emission von Schadstoffen von Verbrennungskraftmaschinen, insbesondere in Kraftfahrzeugen, zu begrenzen, werden seit langem katalytische Konverter zur Entgiftung des Abgases eingesetzt. Damit eine katalytisch unterstützte Umwandlung der Schadstoffe stattfindet, müssen das Abgas und/oder der katalytische Konverter eine Mindesttemperatur aufweisen. Insbesondere nach einem Kaltstart oder einem Neustart der Verbrennungskraftmaschine ist diese Mindesttemperatur noch nicht erreicht. Es wird daher versucht, die Temperatur des Abgases und/oder des katalytischen Konverters durch elektrisch betriebene Heizelemente zu erhöhen.

Aus der WO 92/13636 A1 ist beispielsweise eine Wabenkörperanordnung mit mehreren, gegeneinander abgestützten, Scheiben bekannt. Die Wabenkörperanordnung weist dabei wenigstens zwei Scheiben auf, die voneinander beabstandet sind und nacheinander von dem Abgas durchströmt werden. Zur Verbindung der Scheiben untereinander sind nahe einer Achse Stützstifte angeordnet.

Des Weiteren zeigt die WO 96/10127 A1 einen elektrisch beheizten Wabenkörper, der über Stützstifte und über am Mantel des Wabenkörpers angeordnete Stützelemente an einem zweiten stromabwärts gelagerten Wabenkörper abgestützt wird.

Weiterhin ist aus DE 40 17 360 A1 ein Verfahren zur Nachbehandlung der Abgase von Brennkraftmaschinen bekannt, bei dem eine katalytische Schicht des Konverters in Strömungsrichtung am Anfang der Behandlung des Abgases durch elektrische Energie auf eine Temperatur gebracht wird, die eine Oxidation von Komponenten im Abgas bewirkt, wobei die Aufheizung derart erfolgt, dass durch exotherme Reaktionen ein in Strömungsrichtung fortschreitendes Aufheizen des Katalysators erfolgt.

Der beheizte Wabenkörper muss an die Abgasleitung in Hinsicht auf Form und Größe für jedes Kraftfahrzeugmodell speziell angepasst werden. Somit sind viele Varianten erforderlich, insbesondere auch aufgrund der Abstimmung beider Wabenkörper zueinander und die Adaption an das Abgassystem. Relevante Auslegungskriterien sind hierbei beispielsweise die Art und Position der Stützstifte, die elektrischen Kontaktierung, die elektrische Isolierung, das Strömungsverhalten des Abgases, die thermische Entkopplung vom restlichen System, und vieles mehr. Damit ist die Bereitstellung solcher Heizsysteme mit erhöhten Kosten und/oder erhöhtem Montageaufwand und/oder erhöhtem Herstellungsaufwand verbunden.

Es ist daher Aufgabe der vorliegenden Erfindung, die mit Bezug auf den Stand der Technik bekannten Probleme zumindest teilweise zu lösen. Insbesondere ist es Aufgabe der vorliegenden Erfindung, eine Vorrichtung für den eingangs geschilderten Einsatzzweck anzugeben, mit der ein beheizter Wabenkörper in einer Vielzahl von verschiedenen Fahrzeugmodellen eingesetzt werden kann.

Diese Aufgaben werden gelöst durch eine Vorrichtung gemäß den Merkmalen des Patentanspruchs 1 und/oder 2. Weitere vorteilhafte Ausgestaltungen der Erfindung sind in den jeweils abhängig formulierten Patentansprüchen angegeben. Es ist darauf hinzuweisen, dass die in den abhängigen Patentansprüchen einzeln aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Die Aufgaben werden insbesondere gelöst durch eine Vorrichtung zur Behandlung von Abgasen, die wenigstens einen ersten für das Abgas durchströmbaren Wabenkörper und einen zweiten für das Abgas durchströmbaren Wabenkörper aufweist. Der erste Wabenkörper und der zweite Wabenkörper sind zudem hintereinander in einer Abgasleitung angeordnet. Eine erste Querschnittsfläche des ersten Wabenkörpers ist dabei kleiner als eine zweite Querschnittsfläche des zweiten Wabenkörpers und der erste Wabenkörper ist exzentrisch in der Abgasleitung angeordnet.

Der erste Wabenkörper und der zweite Wabenkörper weisen insbesondere jeweils Kanäle zwischen einer Eintrittsseite und einer Austrittsseite auf, durch die das Abgas von der Eintrittsseite zu der Austrittsseite durch den Wabenkörper strömt. Die Wabenkörper können dabei in bekannter Weise aus einer Keramik extrudiert sein oder aus einem oder mehreren Stapel von metallischen Blechlagen gebildet sein, die zu einem Wabenkörper mit Kanälen aufgewunden oder gewickelt wurden. Die Kanäle können z. B. röhrenförmig verlaufen, es ist aber auch möglich, dass diese verzweigt, gebogen, geknickt oder dergleichen ausgeführt sind. Ebenso kann es sein, dass wenigstens ein Teil der Kanäle Öffnungen aufweist, so dass innerhalb des Wabenkörpers ein Gasaustausch ermöglicht wird. Weiter ist möglich, dass der Wabenköper Engstellen, Aufweitungen, Strömungsleitflächen, oder dergleichen in zumindest einem Teil der Kanäle ausbildet, so dass hiermit eine Beeinflussung des Strömungsverhalten des Abgases und/oder der darin enthaltenen Partikel erfolgt.

Bevorzugt ist der erste Wabenkörper ein elektrisch beheizbarer Wabenkörper, der in der Regel in Abgasströmungsrichtung vor dem zweiten Wabenkörper angeordnet ist, also vom Abgas zuerst kontaktiert bzw. durchströmt wird.

Der zweite Wabenkörper ist selbst nicht elektrisch beheizbar bzw. wird nicht von elektrischem Strom durchströmt. Der erste Wabenkörper ist also elektrisch isoliert gegenüber dem zweiten Wabenkörper. Insbesondere werden der erste Wabenkörper und der zweite Wabenkörper durch separate Bauteile (z.B. Blechlagen) gebildet. Weiter ist bevorzugt, dass die Stirnseiten (Eintrittsseite und Austrittsseite) der Wabenkörper plan oder eben sind, so dass insbesondere (gleiche) Stützstifte zur Einstellung einer gewünschten Entfernung zueinander eingesetzt werden können. Weiter ist bevorzugt, dass alle Blechlagen der Wabenkörper jeweils mit beiden Enden und über die gesamte axiale Länge der Wabenkörper an dem das Gehäuse bildende Bauteil anliegen.

Insbesondere ist eine erste Länge des ersten Wabenkörpers in Strömungsrichtung (wesentlich) kleiner, insbesondere maximal 1/3 oder sogar maximal 1/5, als einer zweiten Länge des zweiten Wabenkörpers in Strömungsrichtung. Bei einem keramischen Wabenkörper wird die Beheizbarkeit insbesondere dadurch realisiert, dass in der Keramik elektrisch leitfähiges Material eingelassen ist. Bei metallischen Wabenkörpern werden die metallischen Blechlagen direkt mit einem Strom beaufschlagt. Im Betrieb durchtritt somit eine Abgasströmung den ersten Wabenkörper, wodurch sie aufgeheizt wird, und gelangt anschließend in den zweiten Wabenkörper.

Der zweite Wabenkörper weist in der Regel eine katalytische Beschichtung auf, mit deren Unterstützung die Schadstoffe im Abgas umgesetzt werden. In diesem Fall kann der erste Wabenkörper gezielt aktiviert werden, um eine für diese katalytische Reaktion geeignete Temperatur einzustellen. Ebenso kann der Wabenkörper eine Filterfunktion oder Partikelauffangfunktion haben, wobei die im ersten Wabenkörper erzeugte thermische Energie zur Regeneration genutzt werden kann. Ebenso ist möglich, dass der zweite Wabenkörper ein Adsorber ist, der in vorgegebenen Temperaturbereichen Abgasbestandteile speichert und freigibt. Hierbei könnte der erste Wabenkörper gezielt aktiviert werden, um dieses Verhalten entsprechend zu beeinflussen.

Mit der Querschnittsfläche der Wabenkörper ist jeweils die Fläche des Wabenkörpers quer zur Strömungsrichtung und insbesondere quer zur Richtung der (röhrenförmigen bzw. geradlinig verlaufenden) Kanäle im Wabenkörper gemeint. Die Querschnittsfläche ist dabei insbesondere die Fläche, die von den Kanälen ausbildenden Material und den Kanälen selbst überdeckt wird. Bei einem kreisrunden Querschnitt des Wabenkör-Fläche, die von den Kanälen ausbildenden Material und den Kanälen selbst überdeckt wird. Bei einem kreisrunden Querschnitt des Wabenkörpers ist die Querschnittsfläche also die Kreisfläche, die von dem gesamten Wabenkörper überdeckt wird. Der erste Wabenkörper hat hierbei eine kleinere Querschnittsfläche als der zweite Wabenkörper, wobei insbesondere ein Freiheitsgrad geschaffen wurde, den ersten Wabenkörper relativ zum zweiten Wabenkörper auszurichten.

Weiter ist der erste Wabenkörper exzentrisch in der Abgasleitung angeordnet. Dies bedeutet insbesondere, dass eine erste zentrale Achse des ersten Wabenkörpers gegenüber einer Mittelachse der Abgasleitung an der Stelle, an der der erste Wabenkörper angeordnet ist, verschoben ist, wobei die erste zentrale Achse des ersten Wabenkörpers und die Mittelachse der Abgasleitung (im Wesentlichen) parallel sind. Dies bedeutet mit anderen Worten insbesondere, dass der erste Wabenkörper die Abgasleitung nicht vollständig überdeckt und die Abgasleitung nicht achsensymmetrisch von dem ersten Wabenkörper teilweise bedeckt ist. Bevorzugt ist allerdings, dass der zweite Wabenkörper die Abgasleitung vollständig überdeckt und/oder dass der zweite Wabenkörper mittig in der Abgasleitung angeordnet ist. Dadurch, dass der erste Wabenkörper nicht zentral in der Abgasleitung angeordnet ist, kann eine einzige Gestalt dieses ersten Wabenkörpers mit einer Vielzahl von unterschiedlichen Ausführungsvarianten der Abgasleitungen und/oder der zweiten Wabenkörper ohne großen Montageaufwand kombiniert werden.

Die oben geschilderten Aufgaben werden auch durch eine Vorrichtung zur Behandlung von Abgasen gelöst, die wenigstens einen ersten für das Abgas durchströmbaren Wabenkörper und einen zweiten für das Abgas durchströmbaren Wabenkörper aufweist, wobei der erste Wabenkörper und der zweite Wabenkörper hintereinander in einer Abgasleitung angeordnet sind. Weiter ist vorgesehen, dass eine erste Querschnittsfläche des ersten Wabenkörpers kleiner ist als eine zweite Querschnittsfläche des zweiten Wabenkörpers und der erste Wabenkörper exzentrisch zu dem zweiten Wabenkörper angeordnet ist und dabei ein Spalt mit einer winkelabhängigen Spaltbreite zwischen dem ersten Wabenkörper und einer Abgasleitung ausgebildet ist, und dass der erste Wabenkörper über mindestens einen elektrischen Leiter elektrisch isoliert durch die Abgasleitung hindurch mit einer Stromquelle verbindbar ist, wobei sich der mindestens eine elektrische Leiter durch den Spalt hindurch erstreckt und der erste Wabenkörper über eine Schweißverbindung oder Lötverbindung in einer Abgasleitung befestigt und mit der Abgasleitung elektrisch leitend verbunden ist.Soweit für diesen weiteren Aspekt der Erfindung dieselben Begriffe verwendet werden, kann auf die entsprechenden Erläuterungen Bezug genommen werden.

Diese Vorrichtung betrifft nunmehr nicht (nur) die in der Abgasleitung montierte Bauteilanordnung sondern ggf. schon ein Produkt, das bereits außerhalb der Abgasleitung eine entsprechende nicht-zentrische Anordnung der beiden Wabenkörper aufweist. Hier sind der erste Wabenkörper und der zweite Wabenkörper bevorzugt gleich ausgerichtet, aber achsparallel angeordnet. Der erste Wabenkörper weist eine erste zentrale Achse auf, die insbesondere in Richtung der Strömungskanäle zeigt und insbesondere auch eine Symmetrieachse des ersten Wabenkörpers bildet. Weiter hat der zweite Wabenkörper eine zweite zentrale Achse, die insbesondere in Richtung ihrer Strömungskanäle zeigt und bevorzugt eine Symmetrieachse des zweiten Wabenkörpers bildet. Die erste zentrale Achse des ersten Wabenkörpers und die zweite zentrale Achse des zweiten Wabenkörpers sind parallel zueinander versetzt. Der erste Wabenkörper und der zweite Wabenkörper sind insbesondere über geeignete Fixiermittel in ihrer Position zueinander fixiert. Diese Fixiermittel können z. B. Stützstifte, eine Haltestruktur oder dergleichen umfassen, die mit beiden Wabenkörpern direkt und/oder mittelbar verbunden sind. Insbesondere könnten die Fixiermittel in beide Wabenkörper (bzw. deren Kanäle) hinein ragen, und/oder zumindest an der Außenseite eines der Wabenkörper befestigt sein. Möglich ist auch, dass die Fixiermittel mit dem Wabenkörper und/oder dessen Zubehörteilen (Elektroden, Isolierungen, Gehäuse, etc.) fest verbunden sind. Bevorzugt isolieren die Fixiermittel den ersten Wabenkörper elektrisch gegenüber dem zweiten Wabenkörper.

Ganz besonders bevorzugt ist, dass der erste Wabenkörper sowohl gegenüber einer Abgasleitung als auch gegenüber dem zweiten Wabenkörper exzentrisch (mit anderen Worten auch außermittig und/oder quer versetzt) positioniert ist.

Weiter ist auch bevorzugt, dass eine Projektion der ersten Querschnittsfläche des ersten Wabenkörpers (in Richtung der ersten und/oder zweiten zentralen Achse) vollständig in der zweiten Querschnittsfläche des zweiten Wabenkörpers liegt. Damit wird insbesondere ein Überdeckungsverhältnis erreicht, das im Wesentlichen der Relation der beiden Querschnittsflächen entspricht.

Bevorzugt ist ebenfalls, dass die Entfernung der Austrittsseite des ersten Wabenkörpers bis zur Eintrittsseite des zweiten Wabenkörpers kleiner als die Erstreckung eines der Wabenkörper in Richtung der zentralen Achse ist. Insbesondere ist diese Entfernung geringer als die Erstreckung des schmalsten Wabenkörpers dieser Anordnung in Richtung der zentralen Achsen. Ganz besonders bevorzugt ist diese Entfernung kleiner als 50 mm [Millimeter] oder sogar kleiner als 20 mm.

Im Hinblick auf die Ausgestaltung der Schweißverbindung/Lötverbindung ist zunächst anzumerken, dass diese insbesondere auch korrosionsbeständig und hochtemperaturfest ist. Die Lötverbindung wird daher insbesondere nach dem so genannten Hartlöt-Verfahren hergestellt. Die Ausbildung einer Schweißverbindung/Lötverbindung kann mit einfachen technischen Mitteln schnell gefertigt werden und ist daher bevorzugt. Gleichwohl können auch andere geeignete stoffschlüssige Anbindungen (alle Verbindungen, bei denen die Verbindungspartner durch atomare und/oder molekulare Kräfte zusammengehalten werden; sie sind überwiegend gleichzeitig nicht lösbare Verbindungen, die sich nur durch Zerstörung der Verbindungsmittel trennen lassen) gewählt werden. Das bedeutet weiter insbesondere, dass der erste Wabenkörper zumindest an einem Punkt, oder insbesondere auch entlang einer Linie, (direkt) an der Abgasleitung anliegt. Ganz besonderes bevorzugt ist, dass genau eine einzelne Schweißverbindung oder Lötverbindung vorgesehen ist. Über die Schweißverbindung / Lötverbindung erfolgt auch eine elektrische Kontaktierung des ersten Wabenkörpers. Über die elektrisch leitende Verbindung mit der Abgasleitung ist der erste Wabenkörper bevorzugt mit einer (elektrischen) Masse verbunden. Da der erste Wabenkörper exzentrisch in der Abgasleitung angeordnet ist, ist auf der von der Schweißverbindung /Lötverbindung gegenüberliegenden Seite ein Abstand bzw. ein Spalt zwischen der Abgasleitung und dem ersten Wabenkörper ausgebildet. Bei einer im Querschnitt kreisrunden Abgasleitung und einem kreisrunden ersten Wabenkörper ist im Querschnitt etwa ein sichelförmiger Spalt zwischen erstem Wabenkörper und Abgasleitung ausgebildet. Durch eine Schweißverbindung/Lötverbindung an einem Punkt oder einer Linie kann der erste Wabenkörper, der z. B. kleiner ist als eine konventionelle Abgasleitung, bei einer Vielzahl von Fahrzeugmodellen in einer Abgasleitung einfach befestigt werden. Die Verbindung über einen einfachen Schweißpunkt oder eine einfache Lötstelle ermöglicht eine deutlich günstigere Serienfertigung, denn auf eine separate Elektrode für diesen Masse-Anschluss kann verzichtet werden.

Auch ist es zu bevorzugen, wenn der erste Wabenkörper und der zweite Wabenkörper miteinander verbunden sind.

Weiterhin ist bevorzugt ein Spalt zwischen dem ersten Wabenkörper und einer Abgasleitung ausgebildet, wobei der Spalt eine Durchströmungsöffnung bildet. Bevorzugt ist genau eine einzelne Durchströmungsöffnung ausgebildet, die ggf. (nur) von (wenigstens) einem elektrischen Anschluss durchdrungen wird. Damit ist auch gemeint, dass der durch die exzentrische Anordnung des ersten Wabenkörpers in der Abgasleitung entstandene Spalt nicht durch Füllmaterial, Haltematerial, Strömungsleitstrukturen, Dichtung oder ähnlichem ausgefüllt ist. Somit tritt ein Teil der Abgasströmung nicht durch den ersten Wabenkörper, sondern kann durch den Spalt an dem
ersten Wabenkörper vorbeiströmen. Der Spalt bildet somit eine Art Bypass für den ersten Wabenkörper. Soweit möglich, kann dieser Spalt so zur Abgasleitung ausgerichtet sein, dass dieser z. B. in einem Strömungsschatten einer vorgelagerten Biegung, Erweiterung, etc. der Abgasleitung angeordnet ist und somit der Bypass-Strom gering gehalten werden kann; dies ist aber nicht notwendig.

Der (bevorzugt genau eine einzelne) elektrische Leiter kann durch einen Draht oder ein entsprechend geformtes metallisches Material, z. B. nach Art einer Elektrode (siehe z. B. eingangs genannter Stand der Technik) gebildet sein.

Die Spaltbreite ist insbesondere der Abstand zwischen dem ersten Wabenkörper und der Abgasleitung, wobei der Abstand in einem Querschnitt ausgehend von der ersten zentralen Achse des ersten Wabenkörpers in radialer Richtung gemessen wird. Da der erste Wabenkörper exzentrisch in der Abgasleitung angeordnet ist, ist die Spaltbreite nicht in alle Richtungen ausgehend von der ersten zentralen Achse gleich. Vielmehr ändert sich die Spaltbreite ausgehend von einer Referenzrichtung mit einem sich ändernden Winkel zur Referenzrichtung. Der elektrische Leiter wird umgeben von einer elektrischen Isolation durch die Abgasleitung hindurchgeführt, so dass ein elektrisches Potential beziehungsweise ein Strom an dem ersten Wabenkörper über den elektrischen Leiter anlegbar ist. Zudem fließt der Strom über die Schweißverbindung/Lötverbindung durch den ersten Wabenkörper. Insbesondere wird der elektrische Leiter gradlinig in radialer Richtung von dem ersten Wabenkörper durch den Spalt geführt. Der elektrische Leiter wird insbesondere an einer Stelle durch den Spalt geführt, an dem
Für den Fall, dass der erste Wabenkörper mehrere (getrennt regelbare bzw. getrennt aktivierbare) Strompfade ausbildet, ist folgende elektrische Kontaktierung bevorzugt. Bei der Vorrichtung ist der erste Wabenkörper über mehrere elektrische Leiter jeweils mit einer Stromquelle verbindbar, wobei die elektrischen Leiter im Bereich gleicher Spaltbreiten mit dem ersten Wabenkörper verbunden sind. Insbesondere können 2, 3 oder 4 solche elektrischen Leiter (und damit auch getrennt regelbare bzw. getrennt aktivierbare Strompfade im ersten Wabenkörper) vorgesehen sein. Die elektrischen Leiter sind insbesondere in einer (gemeinsamen) Ebene quer zur Strömungsrichtung zwischen dem ersten Wabenkörper und der Abgasleitung angeordnet, wobei die elektrischen Leiter nicht unmittelbar nebeneinander angeordnet sind, sondern bevorzugt spiegelsymmetrisch zu einer Spiegelachse durch die Schweißverbindung oder Lötverbindung. Somit wird der erste Wabenkörper neben der Verbindung an der Schweißverbindung / Lötverbindung an mehreren symmetrisch angeordneten Stellen durch die zwei elektrischen Leiter in der Abgasleitung gehalten. Da in diesen Bereichen auch (zumindest paarweise) die gleichen Spaltbreiten vorliegen, kann der Fertigungsaufwand bzw. die Variantenvielfalt für die elektrischen Leiter weiter reduziert werden.

Weiterhin kann vorgesehen sein, dass an einer Mantelfläche des ersten Wabenkörpers mindestens ein Stützstift befestigt ist, der in den zweiten Wabenkörper hineinragt und so den ersten Wabenkörper und den zweiten Wabenkörper mechanisch miteinander verbindet. Dabei ist möglich, dass eine Mehrzahl von Stützstiften vorgesehen ist, wie beispielsweise 2, 3, 4, 5 oder 6, wobei eine deutlich größere Vielzahl im Hinblick auf den Fertigungsaufwand vermieden werden sollte. Mit der Mantelfläche ist insbesondere die zur Durchströmungsrichtung des Abgases parallele Außenfläche des ersten Wabenkörpers gemeint (nicht innerhalb der Kanäle, sondern z. B. den Spalt mit begrenzend). Die Stützstifte sind bevorzugt gegenüber dem ersten Wabenkörper oder gegenüber dem zweiten Wabenkörper elektrisch isoliert. Bevorzugt sind die Stützstifte an der Mantelfläche des ersten Wabenkörpers angeschweißt und/oder angelötet. Weiter können diese in Kanäle des zweiten Wabenkörpers eingeschoben und/oder dort durch Verschweißen/Löten fixiert sein. Ein oder mehrere Stützstifte können insbesondere so an der Mantelfläche des ersten Wabenkörpers befestigt sein, dass sie den Wabenkörper zusätzlich zur Abstützung auch noch radial gegen die Abgasleitung abstützen (z. B. durch eine Position im Spaltzwickel). Über die Stützstifte wird der erste Wabenkörper in der Abgasleitung gehalten. Dadurch, dass die Stütz stifte außen an der Mantelfläche befestigt sind, ist eine einfache Anbringung an den ersten Wabenkörper gewährleistet. Über die Stützstifte kann der erste Wabenkörper mit einer Vielzahl unterschiedlicher zweiter Wabenkörper verbunden werden.

Es ist ferner besonders bevorzugt, dass zumindest der erste Wabenkörper oder der zweite Wabenkörper mit wenigstens einem gewundenen oder gewickelten Stapel aus zumindest teilweise strukturierten Blechlagen durchströmbare Kanäle bildet. Die (metallischen) Blechlagen bilden (zumindest beim ersten Wabenkörper) ggf. auch eine Stromleitstruktur aus, durch die der wärmeverursachende Strom fließt. Die Blechlagen sind insbesondere Metallfolien. Die Blechlagen können auch nur teilweise die Kanalwände ausbilden, z. B. falls sie in ein anderes Material der Kanalwände eingearbeitet sind.

Gemäß einem weiteren Aspekt der Erfindung wird ein Bausatz vorgeschlagen, bestehend aus einem ersten Wabenkörper mit einer ersten Querschnittfläche und mehreren zweiten Wabenkörpern mit voneinander verschiedenen zweiten Querschnittflächen, die jeweils größer sind als die erste Querschnittfläche, und wobei der erste Wabenkörper und die zweiten Wabenkörper zur Verwendung in einer erfindungsgemäßen Vorrichtung geeignet sind. Erfindungsgemäß ist somit nur eine einzelne Ausführungsvariante eines ersten Wabenkörpers erforderlich, der mit einer Mehrzahl von verschiedenen zweiten Wabenkörpern kombiniert, exzentrisch positioniert und in die entsprechenden Abgasleitungen verbaut werden kann. Es ist folglich lediglich der zweite Wabenkörper nach den Vorgaben des Abgassystems auszuwählen, wobei eine unabhängige, kostengünstige Kombination mit dem (kleinen) ersten Wabenkörper aus dem Bausatz erfolgen kann.

Noch einem weiteren Aspekt der Erfindung folgend wird ein Kraftfahrzeug mit einer Verbrennungskraftmaschine und einem Abgassystem vorgeschlagen, wobei in dem Abgassystem eine erfindungsgemäße Vorrichtung ausgebildet ist, und wobei der erste Wabenkörper mittels einer Kontrolleinrichtung elektrisch beheizbar ist.

Zur konkreten Ausgestaltung bzw. Funktion des elektrisch beheizbaren Wabenkörpers kann auch auf den Offenbarungsinhalt der eingangs genannten Dokumente zurückgegriffen werden, insbesondere im Hinblick auf die elektrischen Details zur Art der Wärmeerzeugung, der Ausbildung von Strompfaden und elektrischen Isolierungen, der Auslegung der elektrischen Widerstände, und dergleichen.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, diese darauf jedoch nicht beschränkt ist. Es zeigen schematisch:
- Fig. 1:: ein Kraftfahrzeug mit einer Vorrichtung zur Behandlung von Abgasen,
- Fig. 2:: eine Ausführungsform der Vorrichtung zur Behandlung von Abgasen im Längsschnitt, und
- Fig. 3:: eine Ausführungsform der Vorrichtung zur Behandlung von Abgasen im Querschnitt.

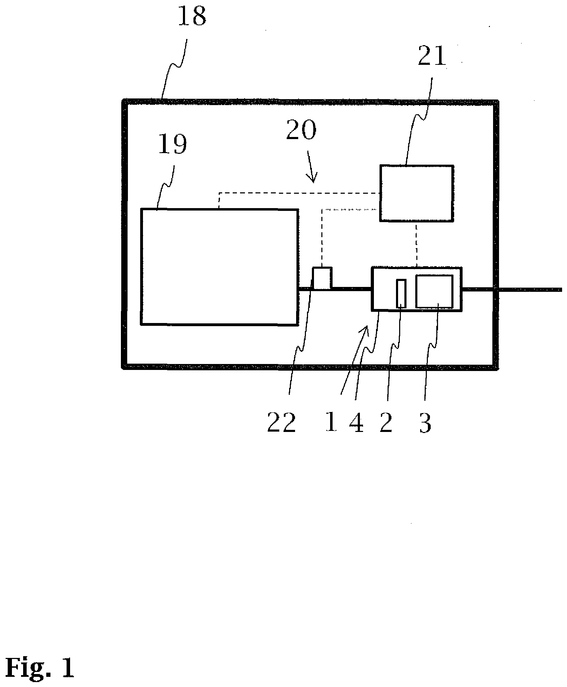

In Fig. 1 ist schematisch ein Kraftfahrzeug 18 mit einer Verbrennungskraftmaschine 19 dargestellt. An die Verbrennungskraftmaschine 19 ist ein Abgassystem 20 mit einer Ausführungsform der Vorrichtung 1 zur Behandlung von Abgasen angeschlossen. Die Vorrichtung 1 umfasst eine Abgasleitung 4, in der ein erster Wabenkörper 2 und ein zweiter Wabenkörper 3 angeordnet sind. An der Abgasleitung 4 ist ferner ein Sensor 22 zur Erfassung zumindest einer Eigenschaft des Abgases anschlossen. Das Kraftfahrzeug 18 umfasst ferner eine Kontrolleinrichtung 21, die zumindest mit der Verbrennungskraftmaschine 19, dem Sensor 22 und/oder der Vorrichtung 1 verbunden ist.

Im Betrieb durchströmt das Abgas der Verbrennungskraftmaschine 19 die Abgasleitung 4 und durchströmt zunächst den ersten Wabenkörper 2. Dieser ist elektrisch beheizbar und erwärmt im (von der Kontrolleinrichtung) aktivierten Zustand das Abgas. Schließlich werden im zweiten Wabenkörper 3 Schadstoffbestanteile des Abgases z. B. katalytisch umgesetzt, gefiltert, adsorbiert und/oder oxidiert - je nach der gewünschten Funktion des zweiten Wabenkörpers. Die in den ersten Wabenkörper 2 eingebrachte Heizleistung kann in Abhängigkeit von Fahrzeit, Abgasparametern und/oder Parametern der Verbrennungskraftmaschine 19 von der Kontrolleinrichtung 21 gesteuert werden.

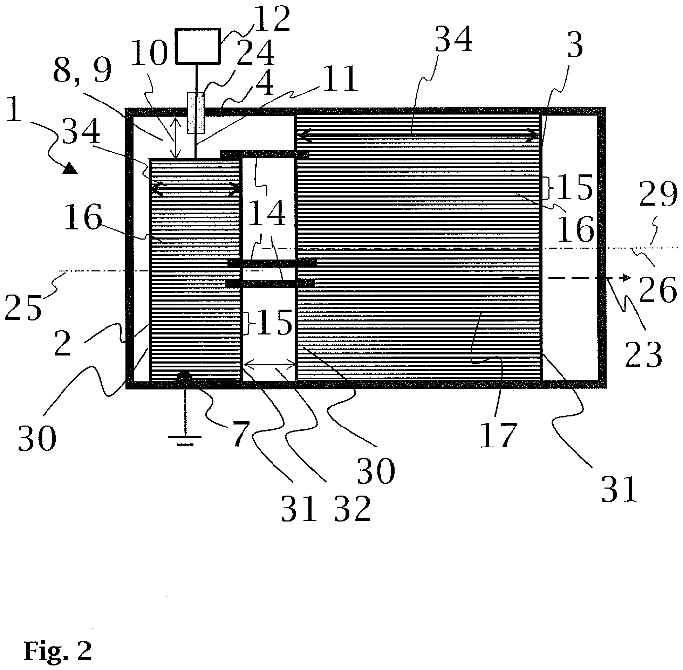

Fig. 2 zeigt schematisch eine Ausführungsform der Vorrichtung 1. Die Vorrichtung 1 umfasst eine Abgasleitung 4, in der ein erster Wabenkörper 2 und ein zweiter Wabenkörper 3 angeordnet sind. Der erste Wabenkörper 2 und der zweite Wabenkörper 3 sind jeweils mit mindestens einem Stapel 15 Blechlagen 16 gebildet, der so gewickelt ist, dass sich Kanäle 17 in einer Strömungsrichtung 23 des Abgases ausbilden. Der erste Wabenkörper 2 ist als ein elektrisch beheizbarer Wabenkörper ausgeführt und über einen (einzelnen) elektrischen Leiter 11, der umgeben von einem Isolator 24 durch die Abgasleitung 4 geführt wird, mit einer Stromquelle 12 verbunden, so dass der ersten Wabenkörper 2 mit einem Strom beaufschlagt werden kann. Der erste Wabenkörper 2 ist zudem an einer Schweißverbindung 7 an die Abgasleitung 4 angeschweißt - alternativ kann hier auch eine Lötverbindung vorgesehen sein. Über die Abgasleitung 4 ist der zweite Wabenkörper 3 mit der elektrischen Masse verbunden.

Der erste Wabenkörper 2 weist eine erste zentrale Achse 25 auf, die sich in Strömungsrichtung 23 erstreckt und eine Symmetrieachse für den ersten Wabenkörper 2 ist. Der zweite Wabenkörper 3 weist eine zweite zentrale Achse 26 auf, die sich ebenfalls in Strömungsrichtung 23 erstreckt und eine Symmetrieachse des zweiten Wabenkörpers 3 ist. Die zweite zentrale Achse 26 ist zudem gleich mit der Mittelachse 29 der Abgasleitung 4. Die erste zentrale Achse 25 ist somit sowohl zu der Mittelachse 29 der Abgasleitung 4 und zu der zweiten zentralen Achse 26 des zweiten Wabenkörpers 3 verschoben, wobei der Durchmesser des ersten Wabenkörpers 2 kleiner ist als der Durchmesser des zweiten Wabenkörpers 3. Durch die exzentrische Anordnung des ersten Wabenkörpers 2 bildet sich ein Spalt 8 aus, der als Durchströmungsöffnung 9 für das Abgas dient. Dieser Spalt 8 weist eine (sich in Umfangsrichtung ändernde) Spaltbreite 10 auf.

Ebenso ist erkennbar, dass zwischen einer Eintrittsseite 30 des zweiten Wabenkörpers 3 und der Austrittsseite 31 des ersten Wabenkörpers 2 eine Entfernung 32 vorgesehen ist, über die der erste Wabenkörper gegen den zweiten Wabenkörper abgestützt ist.

Der erste Wabenkörper 2 ist über Stützstifte 14, die an einer Mantelfläche 13 des ersten Wabenkörpers 2 befestigt sind und in den zweiten Wabenkörper 3 hineinragen, mit dem zweiten Wabenkörper 3 verbunden. Durch eine geeignete Ausbildung von elektrisch isolierendem Material an und/oder in dem Stützstift 14 wird eine elektrische Kontaktierung zwischen erstem Wabenkörper 2 und zweitem Wabenkörper 3 verhindert. Dadurch, dass der erste Wabenkörper 2 im Querschnitt wesentlich kleiner ist als vielfach im Automobilbereich eingesetzte Abgasleitungen, kann der erste Wabenkörper 2 für eine Vielzahl dieser Abgasleitungen eingesetzt werden.

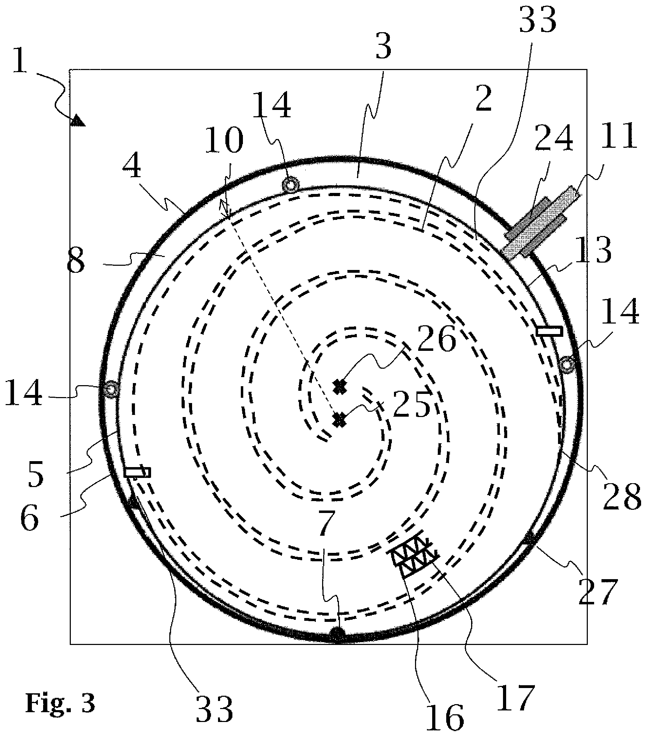

Der zweite Wabenkörper 3 ist selbst nicht elektrisch beheizbar bzw. wird nicht von elektrischem Strom durchströmt. Der erste Wabenkörper 2 ist also elektrisch isoliert gegenüber dem zweiten Wabenkörper 3. Insbesondere werden der erste Wabenkörper 2 und der zweite Wabenkörper 3 durch separate Bauteile (z.B. Blechlagen 16) gebildet. Weiter ist bevorzugt, dass die Stirnseiten (Eintrittsseite 30 und Austrittsseite 31) der Wabenkörper plan oder eben sind, so dass insbesondere (gleiche) Stützstifte 14 zur Einstellung einer gewünschten Entfernung 32 zueinander eingesetzt werden können. Weiter ist bevorzugt, dass alle Blechlagen 16 der Wabenkörper 2, 3 jeweils mit beiden Enden 33 und über die gesamte axiale Länge 34 der Wabenkörper 2, 3 an dem das Gehäuse bildende Bauteil (Schalen 28, Abgasleitung 4) anliegen, siehe beispielhaft auch Fig. 1 und Fig. 3.

Fig. 3 zeigt schematisch einen Querschnitt durch die Abgasleitung 4 einer Vorrichtung 1 - beispielsweise auch aus Fig. 2 -, wobei grundsätzlich gleiche Elemente mit den gleichen Bezugszeichen versehen sind. Für die bessere Darstellbarkeit sind die Kanäle des ersten Wabenkörpers 2 und des zweiten Wabenkörpers 3 hier nicht gezeigt.

Der zweite Wabenkörper 3 überspannt die Abgasleitung 4 vollständig und weist die zweite zentrale Achse 26 auf. Die erste zentrale Achse 25 des ersten Wabenkörpers 2 ist zu der zweiten zentralen Achse 26 des zweiten Wabenkörpers 3 versetzt, so dass der erste Wabenkörper 2 sowohl zu der Abgasleitung 4 als auch zu dem zweiten Wabenkörper 3 exzentrisch angeordnet ist. Durch die exzentrische Anordnung ist ein Spalt 8 ausgebildet, der eine Spaltbreite 10 aufweist, die ausgehend von der ersten zentralen Achse 25 in radialer Richtung gemessen wird.

Der erste Wabenkörper 2 weist an einer Mantelfläche 13 eine zweiteilige Schale 28 auf, über die der erste Wabenkörper 2 elektrisch kontaktiert werden kann und die dem ersten Wabenkörper 2 Stabilität verleiht. An der Mantelfläche 13 beziehungsweise der Schale 28 sind zudem Ausbuchtungen 27 vorgesehen, über die der erste Wabenkörper 2 in der Abgasleitung 4 angelötet werden kann. Zudem sind an der Schale 28 beziehungsweise an der Mantelfläche 13 Stützstifte 14 befestigt, die sich in Kanäle 17 des zweiten Wabenkörpers 3 erstrecken und so den ersten Wabenkörper 2 in der Abgasleitung 4 fixieren.

Der erste Wabenkörper 2 weist eine erste Querschnittsfläche 5 und der zweite Wabenkörper 3 eine zweite Querschnittsfläche 6 auf. Zudem ist der erste Wabenkörper 2 in etwa punktförmig über eine Schweißverbindung 7 und/oder Lötverbindung in der Abgasleitung 4 befestigt. Auf diese Weise ist der erste Wabenkörper 2 auch elektrisch leitend mit der Abgasleitung 4 verbunden. Zudem ist an der anderen Schale 28 ein elektrischer Leiter 11 angebracht, der durch einen Isolator 24 durch die Abgasleitung 4 geführt ist.

Durch die erfindungsgemäße Lehre ist ein elektrisch beheizbarer Wabenkörper angegeben, der mit einer Vielzahl von Stützwabenkörpern verbunden werden kann und somit in einer Vielzahl von verschiedenen Fahrzeugmodellen einfach eingebaut werden kann.

### Bezugszeichenliste

- 1: Vorrichtung
- 2: erster Wabenkörper
- 3: zweiter Wabenkörper
- 4: Abgasleitung
- 5: erste Querschnittsfläche
- 6: zweite Querschnittsfläche
- 7: Schweißverbindung
- 8: Spalt
- 9: Durchströmungsöffnung
- 10: Spaltbreite
- 11: elektrischer Leiter
- 12: Stromquelle
- 13: Mantelfläche
- 14: Stützstift
- 15: Stapel
- 16: Blechlage
- 17: Kanal
- 18: Kraftfahrzeug
- 19: Verbrennungskraftmaschine
- 20: Abgassystem
- 21: Kontrolleinrichtung
- 22: Sensor
- 23: Strömungsrichtung
- 24: Isolator
- 25: erste zentrale Achse
- 26: zweite zentrale Achse
- 27: Ausbuchtung
- 28: Schale
- 29: Mittelachse
- 30: Eintrittsseite
- 31: Austrittsseite
- 32: Entfernung
- 33: Ende
- 34: Länge

## Patentansprüche

1. Vorrichtung (1) zur Behandlung von Abgasen, die wenigstens einen ersten für das Abgas durchströmbaren Wabenkörper (2) und einen zweiten für das Abgas durchströmbaren Wabenkörper (3) aufweist, wobei der erste Wabenkörper (2) und der zweite Wabenkörper (3) hintereinander in einer Abgasleitung (4) angeordnet sind, wobei eine erste Querschnittsfläche (5) des ersten Wabenkörpers (2) kleiner ist als eine zweite Querschnittsfläche (6) des zweiten Wabenkörpers (3) und der erste Wabenkörper (2) exzentrisch in der Abgasleitung (4) angeordnet ist und dabei
▪ ein Spalt (8) mit einer winkelabhängigen Spaltbreite (10) zwischen dem ersten Wabenkörper (2) und einer Abgasleitung (4) ausgebildet ist, und der erste Wabenkörper (2) über mindestens einen elektrischen Leiter (11) elektrisch isoliert durch die Abgasleitung hindurch mit einer Stromquelle (12) verbindbar ist,
**dadurch gekennzeichnet, dass** sich der mindestens eine elektrische Leiter (11) durch den Spalt (8) hindurch erstreckt, und
▪ der erste Wabenkörper (2) über eine Schweißverbindung (7) oder Lötverbindung in einer Abgasleitung (4) befestigt und mit der Abgasleitung (4) elektrisch leitend verbunden ist.

2. Vorrichtung (1) nach Patentanspruch 1, wobei der erste Wabenkörper (2) und der zweite Wabenkörper (3) miteinander verbunden sind.

3. Vorrichtung (1) nach einem der vorhergehenden Patentansprüche, wobei der Spalt (8) eine Durchströmungsöffnung (9) bildet.

4. Vorrichtung (1) nach einem der vorhergehenden Patentansprüche, wobei der erste Wabenkörper (2) über mehrere elektrische Leiter (11) jeweils mit einer Stromquelle (12) verbindbar ist, und die elektrischen Leiter (11) im Bereich gleicher Spaltbreiten (10) mit dem ersten Wabenkörper (2) verbunden sind.

5. Vorrichtung (1) nach einem der vorhergehenden Patentansprüche, wobei außen an einer Mantelfläche (13) des ersten Wabenkörpers (2) mindestens ein Stützstift (14) befestigt ist, der in den zweiten Wabenkörper (3) hineinragt und so den ersten Wabenkörper (2) und den zweiten Wabenkörper (3) mechanisch miteinander verbindet.

6. Vorrichtung (1) nach einem der vorhergehenden Patentansprüche, wobei zumindest der erste Wabenkörper (2) oder der zweite Wabenkörper (3) mit wenigstens einem gewundenen oder gewickelten Stapel (15) aus zumindest teilweise strukturierten Blechlagen (16) durchströmbare Kanäle (17) bildet.

7. Kraftfahrzeug (18) mit einer Verbrennungskraftmaschine (19) und einem Abgassystem (20), wobei in dem Abgassystem (20) eine Vorrichtung (1) nach einem der vorhergehenden Patentansprüche ausgebildet ist, und wobei der erste Wabenkörper (2) mittels einer Kontrolleinrichtung (21) elektrisch beheizbar ist.

## Claims

1. Device (1) for the treatment of exhaust gases, which device has at least one first honeycomb body (2) through which the exhaust gas can flow and one second honeycomb body (3) through which the exhaust gas can flow, wherein the first honeycomb body (2) and the second honeycomb body (3) are arranged in series in an exhaust line (4), wherein a first cross-sectional area (5) of the first honeycomb body (2) is smaller than a second cross-sectional area (6) of the second honeycomb body (3), and the first honeycomb body (2) is arranged eccentrically in the exhaust line (4) and here
• a gap (8) having an angle-dependent gap width (10) is formed between the first honeycomb body (2) and an exhaust line (4), and the first honeycomb body (2) can be connected to a power source (12) in an electrically insulated manner through the exhaust line by means of at least one electrical conductor (11),
**characterized in that** the at least one electrical conductor (11) extends through the gap (8), and
• the first honeycomb body (2) is secured in an exhaust line (4) and connected to the exhaust line (4) in an electrically conductive manner by means of a welded joint (7) or a soldered joint.

2. Device (1) according to claim 1, wherein the first honeycomb body (2) and the second honeycomb body (3) are interconnected.

3. Device (1) according to one of the preceding patent claims, wherein the gap (8) forms a through flow opening (9) .

4. Device (1) according to either of the preceding patent claims, wherein the first honeycomb body (2) can be connected to respective power sources (12) by a plurality of electrical conductors (11), and the electrical conductors (11) are connected to the first honeycomb body (2) in the region of equal gap widths (10).

5. Device (1) according to one of the preceding patent claims, wherein at least one supporting pin (14) is secured on the outside of a circumferential surface (13) of the first honeycomb body (2), said pin projecting into the second honeycomb body (3) and thus connecting the first honeycomb body (2) and the second honeycomb body (3) mechanically to one another.

6. Device (1) according to one of the preceding patent claims, wherein at least the first honeycomb body (2) or the second honeycomb body (3) forms ducts (17) through which gas can flow by means of at least one wound or coiled stack (15) of at least partially structured sheet plies (16).

7. Motor vehicle (18) having an internal combustion engine (19) and an exhaust system (20), wherein a device (1) according to one of the preceding patent claims is formed in the exhaust system (20), and wherein the first honeycomb body (2) can be electrically heated by means of a control device (21).

## Revendications

1. Ensemble (1) de traitement de gaz d'échappement qui présente au moins un premier corps (2) en nid d'abeilles apte à être traversé par les gaz d'échappement et un deuxième corps (3) en nid d'abeilles apte à être traversé par le nid d'abeilles, la premier corps (2) en nid d'abeilles et le deuxième corps (3) en nid d'abeilles étant disposés l'un à la suite de l'autre dans un conduit (4) à gaz d'échappement, une première superficie (5) de la section transversale du premier corps (2) en nid d'abeilles étant inférieure à une deuxième superficie (6) de la section transversale du deuxième corps (3) en nid d'abeilles et le premier corps (2) en nid d'abeilles étant disposé en position décentrée dans le conduit (4) à gaz d'échappement,
un interstice (8) dont la largeur (10) dépend de l'angle est formé entre le premier corps (2) en nid d'abeilles et un conduit (4) de gaz d'échappement et le premier corps (2) en nid d'abeilles peut être relié à travers le conduit de gaz d'échappement par au moins un conducteur électrique (11) à une source de courant (12) tout en étant isolé électriquement, **caractérisé en ce que**
le ou les conducteurs électriques (11) s'étendent dans l'interstice (8) et
**en ce que** le premier corps (2) en nid d'abeilles est fixé dans un conduit (4) de gaz d'échappement par une liaison soudée (7) ou une liaison brasée et est relié de manière électriquement conductrice au conduit (4) de gaz d'échappement.

2. Ensemble (1) selon la revendication 1, dans lequel le premier corps en nid d'abeilles (2) et le second corps en nid d'abeilles (3) sont interconnectés.

3. Ensemble (1) selon l'une des revendications précédentes, dans lequel l'intervalle (8) forme une ouverture d'écoulement traversant (9).

4. Ensemble (1) selon l'une des revendications précédentes, dans lequel le premier corps (2) en nid d'abeilles peut être relié à une source de courant (12) par plusieurs conducteurs électriques (11), les conducteurs électriques (11) étant reliés au premier corps (2) en nid d'abeilles au niveau de mêmes largeurs (10) d'interstice.

5. Ensemble (1) selon l'une des revendications précédentes, dans lequel au moins une tige de soutien (14) qui pénètre dans le deuxième corps (3) en nid d'abeilles et qui relie mécaniquement l'un à l'autre le premier corps (2) en nid d'abeilles et le deuxième corps (3) en nid d'abeilles est fixé à l'extérieur sur la surface d'enveloppe (13) du premier corps (2) en nid d'abeilles.

6. Ensemble (1) selon l'une des revendications précédentes, dans lequel au moins le premier corps (2) en nid d'abeilles ou le deuxième corps (3) en nid d'abeilles forment des canaux (17) aptes à être traversés par au moins un empilement (15) spiralé ou enroulé de couches (16) de tôle au moins partiellement structurée.

7. Véhicule automobile (18) doté d'un moteur (19) à combustion interne et d'un système (20) de gaz d'échappement, un ensemble (1) selon l'une des revendications précédentes étant formé dans le système (20) de gaz d'échappement et le premier corps (2) en nid d'abeilles pouvant être chauffé électriquement au moyen d'un dispositif de contrôle (21).
